# EUROPEAN PATENT APPLICATION

(11) **EP 4 576 334 A1**
(43) Date of publication of application: **25.06.2025**
(21) Application number: 23854018.1
(22) Date of filing: 31.05.2023
(51) Int. Cl.: H01M 10/615, H01M 10/625, B60L 50/60

(54) **BATTERY SELF-HEATING DEVICE AND VEHICLE WITH SAME**

(30) Priority: 18.08.2022 CN 202222189333 U
(71) Applicant: BYD Company Limited, Shenzhen, Guangdong 518118 (CN)
(72) Inventor: YU, Fengchuan, Shenzhen, Guangdong 518118 (CN); ZHANG, Xingchun, Shenzhen, Guangdong 518118 (CN); SUN, Haiping, Shenzhen, Guangdong 518118 (CN)
(74) Representative: Mathys & Squire
(86) International application number: PCT/CN2023/097495
(87) International publication number: WO 2024/037112

(57) **Abstract**

A vehicle, which is provided with a battery self-heating device. The battery self-heating device comprises a power storage device, an inductor, a control unit and a capacitor. The power storage device comprises a first power storage device and a second power storage device, which are arranged in series. One end of the inductor is connected between the first power storage device and the second power storage device. The control unit comprises at least one phase of bridge arm. The other end of the inductor is connected to the midpoint of the at least one phase of bridge arm. Two ends of the at least one phase of bridge arm are respectively connected to a positive electrode and a negative electrode of the power storage device. Two ends of the capacitor are respectively connected to the positive electrode and the negative electrode of the power storage device. The capacitor comprises a first X capacitor and a second X capacitor, which are connected in series. One end of the inductor is connected between the first X capacitor and the second X capacitor.

## Description

### CROSS-REFERENCE TO RELATED APPLICATIONS

The present disclosure claims priority to and benefits of Chinese Patent Application No. 202222189333.6, filed on August 18, 2022 and entitled "BATTERY SELF-HEATING DEVICE AND VEHICLE WITH SAME", which is incorporated herein by reference in its entirety.

### FIELD

The present disclosure relates to the field of vehicle technologies, and in particular, to a battery self-heating device and a vehicle with the same.

### BACKGROUND

For an electric vehicle in the related art, when traveling in a low-temperature environment, charging and discharging performance of a power storage device deteriorates seriously, and charging and discharging efficiency is reduced. As a result, a range of the vehicle is greatly reduced, service life of the power storage device is affected, and user experience is poor. Generally, an existing battery heating device can heat a battery only when the vehicle stops, for example, heating the battery by using a positive temperature coefficient (PTC) thermistor. This makes it difficult to resolve a problem of heating the battery during travel of the vehicle.

### SUMMARY

The present disclosure aims to resolve at least one of the technical problems existing in the related art. Therefore, an objective of the present disclosure is to provide a battery self-heating device. When the battery self-heating device is applied to a vehicle, a power storage device can implement self-heating both during travel of the vehicle and when the vehicle is parked, to ensure a range of the vehicle and extend service life of the power storage device.

According to the present disclosure, a vehicle with the foregoing battery self-heating device is further provided.

To achieve the foregoing objective, according to an embodiment in a first aspect of the present disclosure, a battery self-heating device is provided, comprising: a power storage device, the power storage device comprising a first power storage device and a second power storage device arranged in series; an inductor, one end of the inductor being connected between the first power storage device and the second power storage device arranged in series; a control unit, the control unit comprising at least one phase bridge arm, the other end of the inductor being connected to a midpoint of the at least one phase bridge arm, and two ends of the at least one phase bridge arm are respectively connected to a positive electrode and a negative electrode of the power storage device; and a capacitor, two ends of the capacitor being respectively connected to the positive electrode and the negative electrode of the power storage device, the capacitor comprising a first X capacitor and a second X capacitor connected in series, and the one end of the inductor being connected between the first X capacitor and the second X capacitor.

According to an embodiment of the present disclosure, when the battery self-heating device is applied to the vehicle, the power storage device can implement self-heating both during travel of the vehicle and when the vehicle is parked, to ensure the range of the vehicle and extend the service life of the power storage device.

According to some embodiments of the present disclosure, the first X capacitor is an X1 capacitor, and the second X capacitor is an X2 capacitor.

According to some embodiments of the present disclosure, the first X capacitor is connected to the one end of the inductor through a first contactor.

According to some embodiments of the present disclosure, the inductor is at least one phase winding of a motor.

According to some embodiments of the present disclosure, the inductor is three phase windings of the motor, the control unit is a motor controller, and the motor controller comprises three phase bridge arms. One end of the three phase windings is connected, through an N line and after being joined, between the first power storage device and the second power storage device connected in series, and the other end of the three phase windings is respectively connected to a midpoint of the three phase bridge arms.

According to some embodiments of the present disclosure, the three phase bridge arms comprise an upper bridge arm and a lower bridge arm respectively, and the three upper bridge arms are connected to the positive electrode of the power storage device through a self-heating safety device after being joined.

According to some embodiments of the present disclosure, the self-heating safety device is a fuse wire.

According to some embodiments of the present disclosure, the battery self-heating device further comprises: a Hall element, the three phase bridge arms and the three phase windings being connected through a conductive structure, and the Hall element being sleeved on the conductive structure and connected to the control unit.

According to some embodiments of the present disclosure, the first power storage device comprises a first battery and a first resistor connected in series, and the second power storage device comprises a second battery and a second resistor connected in series.

According to some embodiments of the present disclosure, the motor controller further comprises: a control panel, the control panel being connected to the three phase bridge arms and being configured to control the three upper bridge arms to be simultaneously turned off, the three lower bridge arms to be simultaneously turned off, and states of the three lower bridge arms being opposite to states of the three upper bridge arms.

According to some embodiments of the present disclosure, the battery self-heating device further comprises: a second contactor, the second contactor being respectively connected to the one end of the inductor and the power storage device, and being configured to control connection and disconnection between the one end of the inductor and the power storage device.

According to some embodiments of the present disclosure, the first power storage device comprises a first battery and a first resistor connected in series, and the second power storage device comprises a second battery and a second resistor connected in series.

According to some embodiments of the present disclosure, the power storage device is battery pack.

According to some embodiments of the present disclosure, the first X capacitor can withstand a high voltage of 2.5 kV to 4 kV, and the second X capacitor can withstand a high voltage of no more than 2.5 kV.

According to some embodiments of the present disclosure, the first X capacitor is an X1 capacitor, and the second X capacitor is an X2 capacitor.

According to an embodiment in a second aspect of the present disclosure, a vehicle is provided, comprising the battery self-heating device according to an embodiment in the first aspect of the present disclosure.

According to an embodiment in a second aspect of the present disclosure, the battery self-heating device according to an embodiment in the first aspect of the present disclosure is used, so that the power storage device can implement self-heating both during travel of the vehicle and when the vehicle is parked, to ensure a range of the vehicle and extend service life of the power storage device.

Additional aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description of the embodiments made with reference to the following accompanying drawings, where:
FIG. 1 is a principle diagram of a battery self-heating device according to an embodiment of the present disclosure;
FIG. 2 is a curve chart of a fundamental wave cycle of a battery self-heating device according to an embodiment of the present disclosure;
FIG. 3 is a schematic block diagram of a control unit shown in FIG. 1; and
FIG. 4 is a schematic block diagram of a vehicle according to an embodiment of the present disclosure.

In the drawings:
1. Battery self-heating device;
100. power storage device; 110. first power storage device; 111. first battery; 112. first resistor; 120. second power storage device; 121. second battery; 122. second resistor; 123. N line;
200. motor; 210. inductor;
300. control unit; 310. bridge arm; 320. three phase bridge arms; 321. upper bridge arm; 322. lower bridge arm; 301. control panel;
400. capacitor; 410. first X capacitor; 420. second X capacitor; 430. first contactor;
500. self-heating safety device; 600. Hall element; 601. conductive structure; 700. second contactor; and 1000. vehicle.

### DETAILED DESCRIPTION

Embodiments of the present disclosure are described in detail below. Examples of the embodiments are shown in the accompanying drawings, and same or similar reference signs in all the accompanying drawings indicate same or similar components or components having same or similar functions. The embodiments described below with reference to the accompanying drawings are exemplary, and used only for explaining the present disclosure and should not be construed as a limitation on the present disclosure.

In the description of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "axial", "radial", and "circumferential" are orientations or position relationship shown based on the accompanying drawings, and are merely used for describing the present disclosure and simplifying the description, rather than indicating or implying that the device or element should have a particular orientation or be constructed and operated in a particular orientation, and therefore, should not be construed as a limitation on the present disclosure.

In the description of the present disclosure, a "first feature" or a "second feature" may comprise one or more features.

In the description of the present disclosure, "multiple" means two or more, and "several" means one or more.

A battery self-heating device 1 according to an embodiment of the present disclosure is described below with reference to the accompanying drawings.

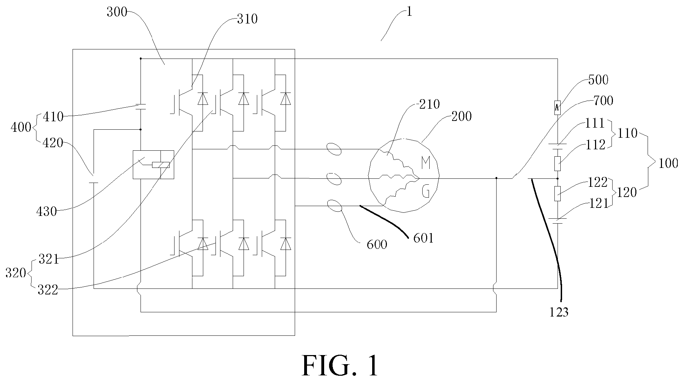

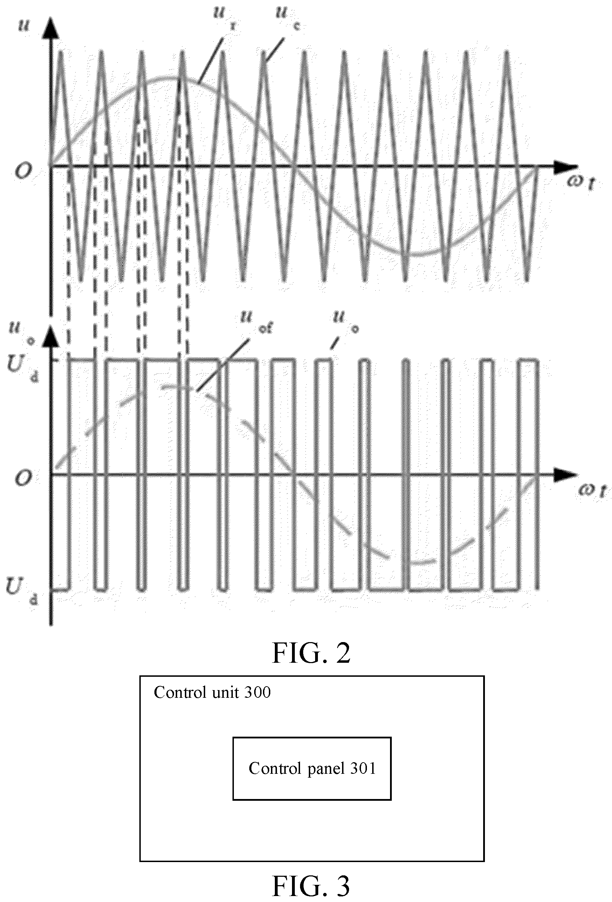

As shown in FIG. 1 and FIG. 2, the battery self-heating device 1 according to the embodiment of the present disclosure comprises a power storage device 100, an inductor 210, a control unit 300, and a capacitor 400.

The power storage device 100 comprises a first power storage device 110 and a second power storage device 120 arranged in series. One end of the inductor 210 is connected between the first power storage device 110 and the second power storage device 120 arranged in series. The control unit 300 comprises at least one phase bridge arm 310. The other end of the inductor 210 is connected to a midpoint of the at least one phase bridge arm 310, and two ends of the at least one phase bridge arm 310 are respectively connected to a positive electrode and a negative electrode of the power storage device 100. Two ends of the capacitor 400 are respectively connected to the positive electrode and the negative electrode of the power storage device 100. The capacitor 400 comprises a first X capacitor 410 and a second X capacitor 420 connected in series, and the one end of the inductor 210 is connected between the first X capacitor 410 and the second X capacitor 420.

The power storage device 100 may be a battery pack, that is, a power battery.

It should be noted that, each phase bridge arm 310 comprises two power switches connected in series. That the other end of the inductor 210 is connected to a midpoint of the at least one phase bridge arm 310 means that the other end of the inductor 210 is connected between the two power switches connected in series, rather than that the other end of the inductor 210 is connected to a middle position of the at least one phase bridge arm 310.

It should be noted that, the power switch in the present disclosure may be an IGBT (insulated-gate bipolar transistor), a MOS transistor (metal oxide semiconductor), or a bipolar junction transistor, or may be a switch made of silicon carbide, or the like.

According to the battery self-heating device 1 in this embodiment of the present disclosure, the power storage device 100 comprises the first power storage device 110 and the second power storage device 120 arranged in series, and one end of the inductor 210 is connected between the first power storage device 110 and the second power storage device 120 arranged in series. The control unit 300 comprises at least one phase bridge arm 310, the other end of the inductor 210 is connected to a midpoint of the at least one phase bridge arm 310, and two ends of the at least one phase bridge arm 310 are respectively connected to the positive electrode and the negative electrode of the power storage device 100. When the battery self-heating device 1 is applied to a vehicle, the power storage device 100 can implement self-heating both during travel of the vehicle and when the vehicle is parked, to ensure a range of the vehicle and extend service life of the power storage device 100.

For example, as shown in FIG. 2, in a positive half cycle of a fundamental wave cycle, when an upper-side power switch of the bridge arm 310 is turned on and a lower-side power switch of the bridge arm 310 is turned off, the first power storage device 110 discharges, a current forms a loop through the IGBT of the upper-side power switch of the bridge arm 310, and the current of the first power storage device 110 charges the inductor 210 through the upper-side power switch of the bridge arm 310. When the upper-side power switch of the bridge arm 310 is turned off and the lower-side power switch of the bridge arm 310 is turned on, the inductor 210 provides a freewheeling current to charge the second power storage device 120, and then a loop is formed through a diode of the lower-side power switch of the bridge arm 310.

In a negative half cycle of the fundamental wave cycle, when the upper-side power switch of the bridge arm 310 is turned off and the lower-side power switch of the bridge arm 310 is turned on, the second power storage device 120 discharges, a current forms a loop through the IGBT of the lower-side power switch of the bridge arm 310, and the current of the second power storage device 120 charges the inductor 210 through the lower-side power switch of the bridge arm 310. When the upper-side power switch of the bridge arm 310 is turned on and the lower-side power switch of the bridge arm 310 is turned off, the inductor 210 provides a freewheeling current to charge the first power storage device 110, and then forms a loop through the diode of the lower-side power switch of the bridge arm 310.

Therefore, the two power switches of the bridge arm 310 operate at a high on/off frequency, and the first power storage device 110 and the second power storage device 120 charge and discharge each other through current oscillation, so that an internal resistance of the first power storage device 110 and an internal resistance of the second power storage device 120 generate heat, to implement self-heating of the power storage device 100.

In this way, in a low-temperature environment, the power storage device 100 can perform self-heating, which can improve power supply efficiency of the power storage device 100. For example, during travel of the vehicle, the power storage device 100 can perform self-heating, so that the power storage device 100 maintains an operating state in which power is supplied at high efficiency. In addition, when the power storage device 100 is charged, the power storage device 100 can perform self-heating first, to improve charging efficiency.

In addition, the current of the power storage device 100 flows through the bridge arm 310 and the inductor 210 and then flows back to the power storage device 100. Compared with heating of the power storage device by using a positive temperature coefficient (PTC) thermistor in the related art, an electric energy loss of the power storage device 100 in the present disclosure is lower. While a temperature of the power storage device 100 is effectively increased, electric energy of the power storage device 100 is not greatly lost, heating loss is reduced, and a range is improved. In addition, there is no need to additionally arrange a PTC heating member, which reduces costs, a volume, and a number of parts.

In addition, the two ends of the capacitor 400 are respectively connected to the positive electrode and the negative electrode of the power storage device 100. The capacitor 400 comprises a first X capacitor 410 and a second X capacitor 420 connected in series, and the one end of the inductor 210 is connected between the first X capacitor 410 and the second X capacitor 420.

Therefore, when the power storage device 100 supplies power to the bridge arm 310 for driving the vehicle, the current of the power storage device 100 first passes through the first X capacitor 410 and the second X capacitor 420 to absorb a ripple current in an output current of the power storage device 100, so that a voltage when the power storage device 100 supplies power to the bridge arm 310 is stable, and when the power storage device 100 is charged, a current entering the power storage device 100 also first passes through the capacitor 400. The capacitor 400 can absorb the ripple current in a charging current inputted to the power storage device 100, so that stability of charging voltages on the two ends of the power storage device 100 are maintained.

In addition, the arrangement of the first X capacitor 410 and the second X capacitor 420 can provide a loop for a high-frequency current between the one end of the inductor 210 on the battery self-heating device 1 and the power storage device 100, to reduce a risk of high-frequency current saturation of a magnetic ring at a frequency as much as possible. The first X capacitor 410 and the second X capacitor 420 can absorb a differential mode current between the one end of the inductor 210 and the power storage device 100, so that a high-frequency differential mode current component of the positive electrode and the negative electrode of the power storage device 100 is reduced.

In this way, the battery self-heating device 1 according to this embodiment of the present disclosure can implement self-heating of the power storage device 100 both during traveling of the vehicle and when the vehicle is in a parking state, to ensure the range of the vehicle and extend the service life of the power storage device 100.

In some specific embodiments of the present disclosure, the first X capacitor 410 is an X1 capacitor, and the second X capacitor 420 is an X2 capacitor. The first X capacitor 410 can withstand a high voltage of 2.5 kV to 4 kV, and the second X capacitor 420 can withstand a high voltage of no more than 2.5 kV.

The first X capacitor 410 is a capacitor that has voltage-stabilizing and filtering functions when the power storage device 100 supplies power to the IGBT of the bridge arm 310 of the control unit 300. During traveling of the vehicle, power of the IGBT is large when the IGBT converts a current. Therefore, a high voltage withstanding range of the first X capacitor 410 needs to be high.

The second X capacitor 420 is configured to absorb a differential mode current on an N line between the inductor 210 and the power storage device 100 when the power storage device 100 performs self-heating. It can be learned from FIG. 1 that the second X capacitor 420 is connected to the inductor 210 through a first contactor 430. When the power storage device 100 performs self-heating, the second X capacitor 420 is in conduction with an end of the inductor 210 connected to the power storage device 100. The power of the power storage device 100 for self-heating is less than the power of the IGBT when the current is converted during traveling of the vehicle. Therefore, a high-voltage withstanding range of the second X capacitor 420 may be less than the high-voltage withstanding range of the first X capacitor 410.

In some specific embodiments of the present disclosure, as shown in FIG. 1, the first X capacitor 410 is connected to the one end of the inductor 210 through the first contactor 430.

In other words, the first X capacitor 410 may be in on/off connection with the inductor 210 through the first contactor 430. When the power storage device 100 needs to perform self-heating, the first contactor 430 is closed, so that the first X capacitor 410 and the second X capacitor 420 are connected to the one end of the inductor 210 through the first contactor 430. When the power storage device 100 does not need to perform self-heating, the first contactor 430 is open, and the first X capacitor 410 and the second X capacitor 420 jointly ensure that a charging voltage and a discharging voltage of the power storage device 100 are stable.

In some specific embodiments of the present disclosure, as shown in FIG. 1, the inductor 210 is at least one phase winding of a motor 200.

In this way, the battery self-heating device 1 and the motor 200 share the winding of the motor 200, so that the winding of the motor 200 are reused, and utilization of the winding of the motor 200 is improved. There is no need to separately arrange an inductor, which reduces a number of parts and production costs, thereby helping to reduce an overall volume of the battery self-heating device 1 and the motor 200.

In some specific embodiments of the present disclosure, as shown in FIG. 1, the inductor 210 is three phase windings of the motor 200. The control unit 300 is a motor controller, and the motor controller comprises three phase bridge arms 320. One end of the three phase windings is connected, through an N line 123 and after being joined, between the first power storage device 110 and the second power storage device 120 connected in series, and the other end of the three phase windings is respectively connected to a midpoint of the three phase bridge arms 320.

In other words, the motor 200 may be a three-phase motor, and the motor 200 may be a drive motor or a generator. The three phase windings are applied to the battery self-heating device 1, and the three phase windings are connected to the three phase bridge arms 320 of the motor controller in a one-to-one correspondence, so that a probability of a ripple current generated by the battery self-heating device 1 can be reduced, voltage stability of the power storage device 100 during self-heating can be further ensured, and electric energy quality can be improved.

Further, as shown in FIG. 1, the three phase bridge arms 320 comprise an upper bridge arm 321 and a lower bridge arm 322 respectively. The three upper bridge arms 321 are connected to the positive electrode of the power storage device 100 through a self-heating safety device 500 after being joined. The self-heating safety device 500 may be a fuse wire. The self-heating safety device 500 is arranged, so that a part of a return current of the power storage device 100 during self-heating can be prevented from being short-circuited with a current on the positive electrode of the power storage device 100, which improves the safety of the device.

In some specific embodiments of the present disclosure, as shown in FIG. 1, the battery self-heating device 1 further comprises a Hall element 600. The three phase bridge arms 320 and the three phase windings are connected through a conductive structure 601, and the Hall element 600 is sleeved on the conductive structure 601 and connected to the control unit 300. The conductive structure 601 may be a wire, a copper bar, or a combination thereof.

Therefore, the Hall element 600 can detect a current value on the conductive structure 601, and a junction end of the three phase windings is connected to the power storage device 100 through the N line. A Hall element may alternatively be arranged on the N line, so that when the power storage device 100 performs self-heating and when the power storage device 100 increases a drive current for the bridge arm 310, the Hall element can send a detection result to the control unit 300, to timely control a value and a direction of a current on the conductive structure 601, and control a value and a direction of a current on the N line, thereby improving reliability of device control by timely feeding back a current in the battery self-heating device 1.

In some specific embodiments of the present disclosure, as shown in FIG. 1, the first power storage device 110 comprises a first battery 111 and a first resistor 112 connected in series, and the second power storage device 120 comprises a second battery 121 and a second resistor 122 connected in series.

In other words, the first resistor 112 is an internal resistance of the first power storage device 110, and the second resistor 122 is an internal resistance of the second power storage device 120. For example, the first resistor 112 and the second resistor 122 are located between the first battery 111 and the second battery 121, and the junction end of the three phase windings is connected between the first resistor 112 and the second resistor 122.

In this way, in a process in which the first battery 111 and the second battery 121 charge and discharge each other, a current oscillation flows through the first resistor 112 and the second resistor 122, causing the first resistor 112 and the second resistor 122 to generate heat. In this case, the power storage device 100 implements self-heating as a whole.

In some specific embodiments of the present disclosure, the battery self-heating device 1 further comprises a direct current connector and a magnetic ring.

A positive electrode of the direct current connector is connected to the positive electrode of the power storage device 100, a negative electrode of the direct current connector is connected to the negative electrode of the power storage device 100, and the magnetic ring is sleeved on the direct current connector. The direct current connector may be connected to an external charging device by using a wire or another conductive structure, for example, may be connected to a charging pile, to charge the power storage device 100.

In this way, the magnetic ring can block external electromagnetic interference to the direct current connector, so that an output voltage of the direct current connector is more stable, thereby ensuring stability of a charging voltage of the power storage device 100, and further improving the range of the vehicle.

In some specific embodiments of this application, as shown in FIG. 3, the motor controller further comprises a control panel 301.

The control panel is connected to the three phase bridge arms 320, and is configured to control the three upper bridge arms 321 to be simultaneously turned on or off and the three lower bridge arms 322 to be simultaneously turned on or off, and states of the three lower bridge arms 322 are opposite to states of the three upper bridge arms 321.

That is, the motor controller may control, by using the control panel, the three upper bridge arms 321 to be synchronously turned on, and control the three lower bridge arms 322 to be synchronously turned off simultaneously. The motor controller may control, by using the control panel, the three upper bridge arms 321 to be synchronously turned off, and control the three lower bridge arms 322 to be synchronously conducted. In this way, a probability of a ripple current generated by the battery self-heating device 1 can be reduced, stability of an output voltage and an input voltage of the power storage device 100 is further ensured, temperature rise of the power storage device 100 is more reliable, and electric energy quality can be improved.

In some specific embodiments of the present disclosure, as shown in FIG. 1, the battery self-heating device 1 further comprises a second contactor 700.

The second contactor 700 is respectively connected to the one end of the inductor 210 and the power storage device 100, and is configured to control connection and disconnection between the one end of the inductor 210 and the power storage device 100.

Therefore, the power storage device 100 may be selectively heated through on/off of the second contactor 700. When a temperature of the power storage device 100 is high or normal (for example, the temperature of the power storage device 100 is not lower than 20 °C), the second contactor 700 may be turned off, no current flows in the battery self-heating device 1, and the power storage device 100 does not perform self-heating, thereby avoiding an excessively high temperature of the power storage device 100, and helping improve electric safety of the power storage device 100.

When the temperature of the power storage device 100 is low (for example, the temperature of the power storage device 100 is lower than 10 °C), the second contactor 700 may be closed first, the power storage device 100, the bridge arm 310, and the inductor 210 form a loop, and then self-heating of the power storage device 100 may be implemented. After the temperature of the power storage device 100 rises (for example, the temperature of the power storage device 100 reaches 20 °C), the second contactor 700 is turned off. In this way, the range of the power storage device 100 is ensured, and the temperature of the power storage device 100 is prevented from being heated excessively high, which helps to improve the discharging performance of the power storage device 100 and has better safety.

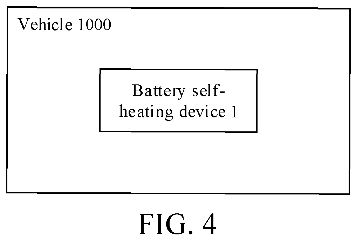

A vehicle 1000 according to an embodiment of the present disclosure is described below with reference to FIG. 4. The vehicle 1000 comprises the battery self-heating device 1 according to the foregoing embodiment of the present disclosure.

According to the vehicle 1000 in the embodiments of the present disclosure, by using the battery self-heating device 1 according to the foregoing embodiment of the present disclosure, the power storage device 100 can implement self-heating both during traveling of the vehicle and when the vehicle is in a parking state, to ensure the range of the vehicle 1000 and extend the service life of the power storage device 100.

Other compositions and operations of the battery self-heating device 1 and the vehicle 1000 with the same according to the embodiments of the present disclosure are known to those of ordinary skill in the art, and details are not described herein again.

In the descriptions of this specification, descriptions such as reference terms "a specific embodiment" and "specific examples" intend to indicate that specific features, structures, materials, or characteristics described with reference to embodiments or examples are included in at least one embodiment or example of the present disclosure. In this specification, schematic descriptions of the foregoing terms are not necessarily directed at the same embodiment or example.

Although the embodiments of the present disclosure have been shown and described, a person of ordinary skill in the art should understand that: various changes, modifications, replacements and variations may be made to the embodiments without departing from the principles and spirit of the present disclosure, and the scope of the present disclosure is as defined by the appended claims and their equivalents.

## Claims

1. A battery self-heating device (1), comprising:
a power storage device (100), the power storage device (100) comprising a first power storage device (110) and a second power storage device (120) arranged in series;
an inductor (210), one end of the inductor (210) being connected between the first power storage device (110) and the second power storage device (120) arranged in series;
a control unit (300), the control unit (300) comprising at least one phase bridge arm (310), the other end of the inductor (210) being connected to a midpoint of the at least one phase bridge arm (310), and two ends of the at least one phase bridge arm (310) being respectively connected to a positive electrode and a negative electrode of the power storage device (100); and
a capacitor (400), two ends of the capacitor (400) being respectively connected to the positive electrode and the negative electrode of the power storage device (100), the capacitor (400) comprising a first X capacitor (410) and a second X capacitor (420) connected in series, and the one end of the inductor (210) being connected between the first X capacitor (410) and the second X capacitor (420).

2. The battery self-heating device (1) according to claim 1, wherein the first X capacitor (410) is an X1 capacitor, and the second X capacitor (420) is an X2 capacitor.

3. The battery self-heating device (1) according to claim 1 or 2, further comprising:
a first contactor (430), the first X capacitor (410) being connected to the one end of the inductor (210) through the first contactor (430).

4. The battery self-heating device (1) according to any one of claims 1 to 3, wherein the inductor (210) is at least one phase winding of a motor (200).

5. The battery self-heating device (1) according to claim 4, wherein the inductor (210) is three phase windings of the motor (200), the control unit (300) is a motor controller, the motor controller comprises three phase bridge arms (320), one end of the three phase windings is connected, through an N line (123) and after being joined, between the first power storage device (110) and the second power storage device (120) connected in series, and the other end of the three phase windings is respectively connected to a midpoint of the three phase bridge arms (320).

6. The battery self-heating device (1) according to claim 5, wherein the three phase bridge arms (320) each comprise:
an upper bridge arm (321), three upper bridge arms (321) being connected to the positive electrode of the power storage device (100) through a self-heating safety device (500) after being joined; and
a lower bridge arm (322).

7. The battery self-heating device (1) according to claim 6, wherein the self-heating safety device (500) is a fuse wire.

8. The battery self-heating device (1) according to any one of claims 5 to 7, further comprising:
a Hall element (600), the three phase bridge arms (320) and the three phase windings being connected through a conductive structure (601), and the Hall element (600) being sleeved on the conductive structure (601) and connected to the control unit (300).

9. The battery self-heating device (1) according to any one of claims 6 to 8, wherein the motor controller further comprises:
a control panel (301), the control panel (301) being connected to the three phase bridge arms (320) and being configured to control the three upper bridge arms (321) to be simultaneously turned off and three lower bridge arms (322) to be simultaneously turned off, and states of the three lower bridge arms (322) being opposite to states of the three upper bridge arms (321).

10. The battery self-heating device (1) according to any one of claims 1 to 9, wherein the first power storage device (110) comprises a first battery (111) and a first resistor (112) connected in series, and the second power storage device (120) comprises a second battery (121) and a second resistor (122) connected in series.

11. The battery self-heating device (1) according to any one of claims 1 to 10, further comprising:
a second contactor (700), the second contactor (700) being connected to the one end of the inductor (210) and the power storage device (100) and being configured to control connection and disconnection between the one end of the inductor (210) and the power storage device (100).

12. The battery self-heating device (1) according to any one of claims 1 to 11, wherein the power storage device (100) is a battery pack.

13. The battery self-heating device (1) according to any one of claims 1 to 11, wherein the first X capacitor (410) is able to withstand a high voltage of 2.5 kV to 4 kV, and the second X capacitor (420) is able to withstand a high voltage of no more than 2.5 kV.

14. The battery self-heating device (1) according to claim 13, wherein the first X capacitor (410) is an X1 capacitor, and the second X capacitor (420) is an X2 capacitor.

15. A vehicle (1000), comprising the battery self-heating device (1) according to any of claims 1 to 14.
